# EUROPÄISCHE PATENTSCHRIFT

(11) **EP 0 811 791 B1**
(45) Veröffentlichungstag und Bekanntmachung des Hinweises auf die Patenterteilung: **27.03.2002**
(21) Anmeldenummer: 97106880.4
(22) Anmeldetag: 25.04.1997
(51) Int. Cl.: F16H 57/05

(54) **Kettentrieb, insbesondere Nebenantrieb bei einer Brennkraftmaschine**
Chain drive, particularly an auxillary drive of an internal combustion engine
Dispositif d'entraînement par chaîne, en particulier pour l'entraînement des auxilliaires d'un moteur à combustion interne

(30) Priorität: 05.06.1996 DE 19622676
(43) Veröffentlichungstag der Anmeldung: 10.12.1997
(73) Patentinhaber: DaimlerChrysler AG, 70567 Stuttgart (DE)
(72) Erfinder: Gruber, Gerhard, 71522 Backnang (DE); Matena, Uwe, 71522 Backnang (DE); Kasper, Rolf, 73207 Plochingen (DE); Gulde, Franz-Paul, 72351 Geislingen (DE)

(56) Entgegenhaltungen:
- GB-A- 739 967
- US-A- 2 051 488
- US-A- 3 672 468
- US-A- 3 958 541
- US-A- 4 276 783
- PATENT ABSTRACTS OF JAPAN vol. 095, no. 001, 28. Februar 1995 -& JP 06 299834 A (SUZUKI MOTOR CORP), 25. Oktober 1994
- PATENT ABSTRACTS OF JAPAN vol. 013, no. 183 (M-820), 28. April 1989 -& JP 01 012177 A (TOMIYA ENG KK;OTHERS: 01), 17. Januar 1989

## Beschreibung

Die Erfindung betrifft einen Kettentrieb, insbesondere einen Nebenantrieb bei einer Brennkraftmaschine, entsprechend dem Oberbegriff des Anspruchs 1.

Ein gattungsgemäßer Kettentrieb ist aus der US-A-2 051 488 bekannt. Dabei wird das Schmiermittel einem Kettenspannrad zugeführt. Problematisch ist bei dieser Lösung jedoch, daß eine eventuelle Veränderung der Schmiermittelmenge nur in äußerst aufwendiger Art und Weise realisiert werden kann.

Die US-A-3 958 541 beschreibt eine Vorrichtung zum Schmieren einer Kurbelwelle, bei welcher das Schmiermittel über ein Ölpumpe einer kreisförmigen Nut zugeleitet wird. Von dieser Nut gelangt das Schmiermittel über eine quer dazu verlaufende Nut von einer Lagerstelle der Kurbelwelle nach außen.

Aus dem DE-GM 92 00 487 ist ein weiterer Kettentrieb bekannt, bei dem zur Schmierung der Kette in einem Kettenrad eine radiale Schmiermittel-Zufuhrbohrung angeordnet ist, die am Zahngrund zwischen benachbarten Zähnen mündet und deren Mündung von einem Kugelventil verschlossen ist, das durch den von der Kette ausgeübten Druck periodisch geöffnet wird, so daß unter der durch die Drehung des Kettenrades erzeugten Fliehkraft periodisch kleine Schmiermittelmengen austreten und die Kette benetzen sollen. Eine zuverlässige und ausreichende Schmierung der Kette ist damit jedoch nicht gewährleistet, weil die Rollen oder Hülsen der Kette das Kugelventil zwar aufstoßen, jedoch gleichzeitig die Mündung der Zufuhrbohrung weitgehend verschließen. Darüber hinaus ist das Kugelventil während eines großen Teils jeder Umdrehung des Kettenrades geschlossen, da der Umschlingungswinkel selten mehr als 1800 beträgt. Außerdem ist die Ventilkugel hohem Verschleiß ausgesetzt.

Bei einem aus der FR-A 2 311 970 bekannten Kettentrieb ist ein Kettenrad über eine eingepreßte Lagerbüchse auf einem feststehenden Lagerzapfen gelagert, der eine mit einer Schmiermittelquelle in Verbindung stehende Längsbohrung sowie zwei davon ausgehende Radialkanäle aufweist. In der Lagerbüchse und in der Kettenradnabe ist auf jeder Seite des Zahnkranzes eine Vielzahl von nach außen zu offenen radialen Bohrungen vorgesehen, von denen beim Umlauf des Kettenrades jeweils eine mit einer der Radialkanäle in dem feststehenden Lagerzapfen in Verbindung kommt. Somit erfolgt die Schmierung der Kette nur jeweils an einer Stelle, nämlich über diejenige radiale Bohrung, die gerade mit dem betreffenden Radialkanal fluchtet.

Aufgabe der Erfindung ist es, einen Kettentrieb der gattungsgemäßen Art zu schaffen, bei dem eine gegenüber dem genannten Stand der Technik verbesserte und zuverlässige Schmierung der Kette auf einfache Weise erreicht wird.

Diese Aufgabe wird erfindungsgemäß durch die im Kennzeichen des Anspruchs 1 angegebenen Merkmale gelöst.

Bei dem erfindungsgemäßen Vorschlag ist die Mündung der Zuflußbohrung ständig offen, so daß die Kettenglieder und insbesondere auch die besonders verschleißgefährdeten Gelenkflächen zwischen den Hülsen und den diese durchdringenden Bolzen wirksam geschmiert werden. Darüber hinaus wird dadurch, daß der radialen Bohrung im Kettenrad durch ihren Anschluß an die Ringnut ständig Schmiermittel zugeführt wird, das Schmiermittel auch außerhalb des Kettenrades auf die Kette gespritzt, sobald sich das Kettenrad so weit gedreht hat, daß die Kette nicht mehr über der Mündung der radialen Bohrung liegt. Durch diese mehrfache Schmierung wird der Verschleiß der Kette erheblich reduziert. Mit dem Wegfall des Kugelventils wird der Bauaufwand verringert und jeder Verschleiß vermieden.

Eine Drosselung der Schmiermittelzufuhr, die erforderlich ist, um eine Ölverschäumung zu vermeiden und bei niedrigen Drehzahlen den Schmiermitteldruck im System nicht zu stark abfallen zu lassen, kann durch entsprechende Dimensionierung des Zuflußweges des Schmiermittels oder eines Teils desselben erreicht werden. Dabei ist es besonders vorteilhaft, daß erfindungsgemäß in der Lagerfläche der Lagerbüchse eine Quernut vorgesehen ist, die von der Ringnut ausgeht und in einer Bohrung in der Lagerbüchse mündet, die mit der radialen Bohrung im Kettenrad fluchtet, wobei die Tiefe und die Breite dieser Quernut so bemessen wird, daß sie eine Drosselstelle bildet, durch die die Schmiermittel-Spritzmenge auf das notwendige Maß gedrosselt wird. Gleichzeitig wird durch diese Drosselung vor der radialen Nut die Schmierung des Kettenradlagers sichergestellt.

Bei Verwendung einer Duplexkette, die um Kettenräder mit jeweils zwei Zahnkränzen herumgeführt ist, kann die radiale Bohrung auf der Umfangsfläche des betreffenden Kettenrades zwischen den Zahnkränzen mündet.

Ein Ausführungsbeispiel der Erfindung wird im folgenden unter Bezugnahme auf die Zeichnungen beschrieben.

Es zeigt:
- Fig. 1: eine Seitenansicht eines Abschnittes eines Kettentriebes, wobei ein Zwischenrad im Querschnitt dargestellt ist,
- Fig. 2: einen Schnitt entlang Linie 2-2 in Fig. 1,
- Fig. 3: die Lagerbüchse des Zwischenrades von Fig. 2, und
- Fig. 4: einen Schnitt entlang Linie 4-4 in Fig. 3.

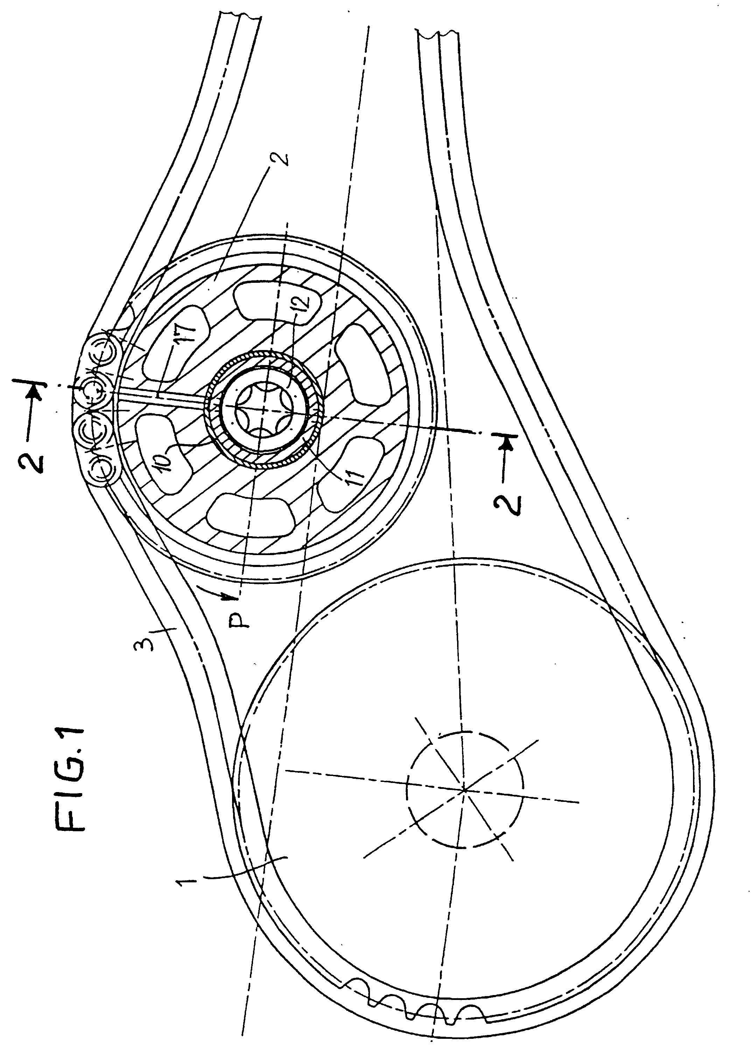

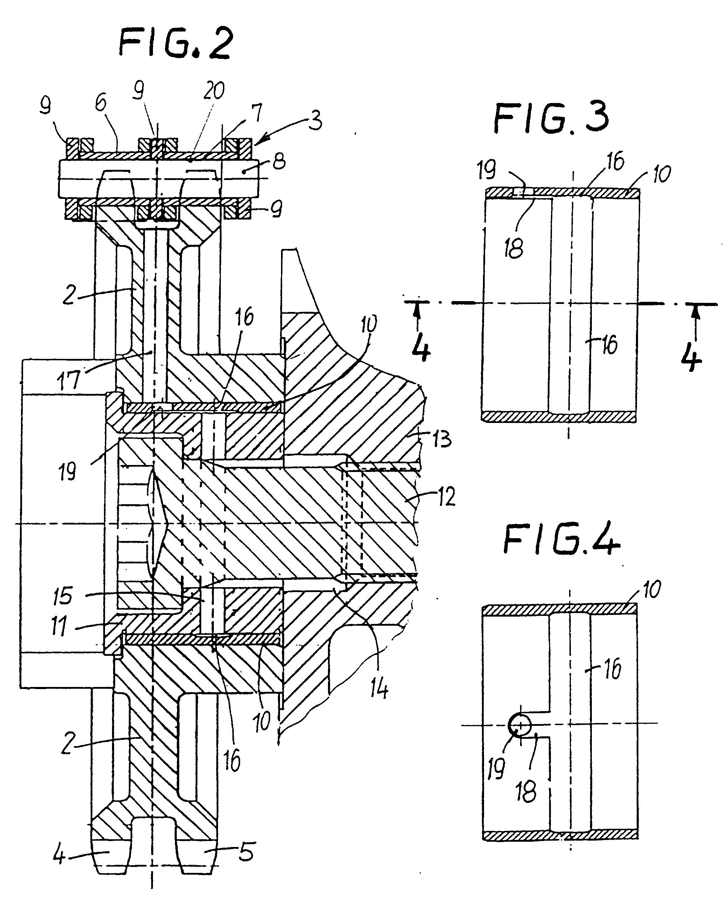

In Fig. 1 ist ein Kettentrieb, beispielsweise zum Antrieb einer Nockenwelle einer Brennkraftmaschine, dargestellt, der ein Kettenrad 1 und ein Zwischenrad 2 aufweist, um die im Ausführungsbeispiel eine Duplex-Kette 3 herumgeführt ist. Dementsprechend sind die Räder 1 und 2 mit zwei Zahnkränzen 4 und 5 (Fig.2) versehen. Jedes Glied der Duplex-Kette hat zwei Hülsen 6 und 7, die auf einem gemeinsamen Bolzen 8 sitzen und jeweils mit einem Zahnkranz 4 bzw. 5 zusammenwirken. Benachbarte Glieder sind durch Laschen 9 ,miteinander verbunden.

Wie aus Fig. 2 ersichtlich, hat das Zwischenrad 2 eine eingepreßte Laufbüchse 10, mit der es auf einem feststehenden Lagerzapfen 11 gelagert ist, der durch eine Schraube 12 an einem Gehäuse 13 befestigt ist. Die Schmierölversorgung dieses Gleitlagers erfolgt aus einem Druckraum 14 über eine Querbohrung 15 im Lagerzapfen 7 und eine in die Lagerfläche der Lagerbüchse 6 eingeprägte Ringnut 16.

Zur Schmierung der Kette 3 ist im Zwischenrad 2 eine radiale Bohrung 17 vorgesehen, die mit der Ringnut 16 über eine Quernut 18 in der Lagerfläche der Lagerbüchse 10 und eine gestanzte Bohrung 19 in der Lagerbüchse 10 in Verbindung steht. Die radiale Bohrung 17 mündet zwischen den Zahnkränzen 4 und 5 am Umfang des Zwischenrades 2, also in dem Bereich, in dem die Kette 3 nahezu aufliegt. Die Zentrifugalkraft fördert das Schmieröl entlang der mittleren Gelenklasche 9 zur Gelenkfläche 20 zwischen den Hülsen 6,7 und dem Bolzen 8, der am höchsten verschleißgefährdeten Stelle einer Kette. Wenn die Mündung der radialen Bohrung 17 nach entsprechender Drehung des Zwischenrades 2 von der Kette 3 freikommt, spritzt der freie Ölstrahl auf die Kette, die somit noch einmal geschmiert wird. Bei Drehung des Zwischenrades 2 in Richtung des Pfeiles P spritzt der Ölstrahl auf die Kette, kurz bevor diese auf das Kettenrad 1 aufläuft, so daß eine gute Schmierung auch zwischen Kette 3 und Kettenrad 1 sichergestellt ist. Die Quernut 18 ist in Breite und Tiefe so dimensioniert, daß sie die Schmieröl-Spritzmenge auf das notwendige Maß herunterdrosselt.

Die Erfindung ist nicht auf das dargestellte Ausführungsbeispiel beschränkt. So würde bei einem Kettentrieb mit einer Einfach-Kette die Mündung der radialen Bohrung 17 ähnlich wie bei der Ausführung gemäß des eingangs genannten DE-GM 92 00 487 zwischen zwei benachbarte Zähne gelegt werden. Auch kann in dem betreffenden Kettenrad mehr als eine radiale Bohrung vorgesehen werden.

## Patentansprüche

1. Kettentrieb, insbesondere Nebenantrieb bei einer Brennkraftmaschine, mit einer Rollen-/Hülsenkette (3), die um Kettenräder (1,2) herumgeführt ist, von denen mindestens ein Kettenrad (2) mindestens eine radiale Bohrung (17) aufweist, die mit einer Schmiermittelquelle (14) in Verbindung steht und durch die Schmiermittel auf die Kette befördert wird, wobei das mit der radialen Bohrung (17) versehene Kettenrad (2) über eine Lagerbüchse (10) auf einem feststehenden Lagerzapfen (11) gelagert ist und die Zuführung des Schmiermittels zu der Lagerfläche aus einer Schmiermittelquelle (14) über eine Radialbohrung (15) in dem Lagerzapfen (11) und eine Ringnut (16) in der Lagerfläche der Lagerbüchse (10) erfolgt und daß die radiale Bohrung (17) an die Ringnut (16) angeschlossen ist und frei in den Bereich der Kettenauflage mündet,
**dadurch gekennzeichnet, daß**
die Lagerbüchse (10) in das Kettenrad (2) eingepreßt ist, daß in der Lagerfläche der Lagerbüchse (10) eine Quernut (18) vorgesehen ist, die von der Ringnut (16) ausgeht und in einer Bohrung (19) in der Lagerbüchse (10) mündet, die mit der radialen Bohrung (17) in dem Kettenrad (2) fluchtet, und daß die Tiefe und die Breite der Quernut (18) so bemessen sind, daß sie eine Drosselstelle bildet, durch die die Schmiermittel-Spritzmenge auf das notwendige Maß gedrosselt wird.

2. Kettentrieb nach Anspruch 1 mit einer Duplex-Kette (3), die um Kettenräder (1,2) mit jeweils zwei Zahnkränzen (4,5) herumgeführt ist
**dadurch gekennzeichnet, daß**
die radiale Bohrung (17) auf der Umfangsfläche des betreffenden Kettenrades (2) zwischen den Zahnkränzen (4,5) mündet.

## Claims

1. Chain and sprocket wheel drive, in particular an auxiliary drive for an internal combustion engine, having a roller/bush chain (3) which is fed around sprocket wheels (1, 2), of which at least one sprocket wheel (2) has at least one radial bore (17) communicating with a lubricant source (14) by means of which lubricant is conveyed to the chain, the sprocket wheel (2) having the radial bore (17) being mounted on a stationary bearing pin (11) by means of a bearing bush (10) and the lubricant being delivered to the bearing surface from a lubricant source (14) via a radial bore (15) in the bearing pin (11) and an annular groove (16) in the bearing surface of the bearing bush (10), the radial bore (17) adjoining the annular groove (16) and opening freely into the region of the chain seating,
**characterised in that**
the bearing bush (10) is pressed into the sprocket wheel (2), a transverse groove (18) is provided in the bearing surface of the bearing bush (10) starting from the annular groove (16) and opening into a bore (19) in the bearing bush (10) which sits flush with the radial bore (17) in the sprocket wheel (2) and the depth and the width of the transverse groove (18) are dimensioned so that it forms a throttle point by means of which the quantity of lubricant sprayed is throttled to the requisite degree.

2. Chain and sprocket wheel drive as claimed in claim 1 having a duplex chain (3) which is fed around sprocket wheels (1, 2), each having two ring gears (4, 5),
**characterised in that**
the radial bore (17) on the circumferential surface of the relevant sprocket wheel (2) opens between the ring gears (4, 5).

## Revendications

1. Transmission à chaîne, en particulier transmission auxiliaire dans un moteur à combustion interne, comprenant une chaîne à rouleaux/douilles (3), qui est passée autour de roues dentées (1, 2), parmi lesquelles au moins une roue dentée (2) comporte au moins un perçage radial (17) qui communique avec une source de lubrifiant (14) et via lequel le lubrifiant est convoyé jusqu'à la chaîne, dans laquelle la roue dentée (2) pourvue du perçage radial (17) est montée sur un tenon de palier fixe (11) via une douille de palier (10) et l'admission de lubrifiant vers la surface du palier a lieu depuis une source de lubrifiant (14) via un perçage radial (15) dans le tenon de palier (11) et une gorge annulaire (16) dans la surface de palier de la douille de palier (10), et en ce que le perçage radial (17) est raccordé à la gorge annulaire (16) et débouche librement dans la région de l'appui de la chaîne,
**caractérisée en ce que** la douille de palier (10) est enfoncée à la presse dans la roue dentée (2), **en ce qu'**il est prévu dans la surface de palier de la douille de palier (10) une gorge transversale (18) qui part de la gorge annulaire (16) et débouche dans un perçage (19) dans la douille de palier (10) qui est en alignement avec le perçage radial (17) dans la roue dentée (2), et **en ce que** la profondeur et la largeur de la gorge transversale (18) sont ainsi dimensionnées qu'elles forment un emplacement d'étranglement à travers lequel la quantité injectée de lubrifiant est étranglée à la mesure nécessaire.

2. Transmission à chaîne selon la revendication 1, comprenant une chaîne duplex (3) qui est passée autour de roues dentées (1,2) comportant chacune deux couronnes dentées (4, 5), **caractérisée en ce que** le perçage radial (17) débouche sur la surface périphérique de la roue dentée concernée (2) entre les couronnes dentées (4, 5).
